# EUROPEAN PATENT APPLICATION

(11) **EP 4 783 500 A1**
(43) Date of publication of application: **29.07.2026**
(21) Application number: 25225610.2
(22) Date of filing: 19.12.2025
(51) Int. Cl.: H04L 1/1607

(54) **BUFFER STATUS REPORT IN MULTI-STATION DEVICE BLOCK ACKNOWLEDGMENT**

(30) Priority: 24.01.2025 US 202563749378 P
(71) Applicant: INTEL Corporation, Santa Clara, CA 95054 (US)
(72) Inventor: CARIOU, Laurent, 29290 Milizac (FR)
(74) Representative: Viering, Jentschura & Partner mbB Patent- und Rechtsanwälte

(57) **Abstract**

This disclosure describes systems, methods, and devices related to optimized feedback integration. A device may receive a buffer status report protocol (BSRP) trigger frame. The device may transmit a response in a non-high throughput (non-HT) duplicate physical protocol data unit (PPDU) format, the response including a multi-station block acknowledgment frame. The device may include unavailability information in a multi-station block acknowledgment frame.

## Description

### CROSS-REFERENCE TO RELATED APPLICATIONS

The present application claims priority to US Provisional Patent Application Ser. No. 63/749,378 filed on January 24, 2025.

### BACKGROUND

Wireless devices are becoming more prevalent, necessitating efficient access to wireless channels. Standards are evolving to enhance connectivity, integrating advanced technologies in modem networks.

### BRIEF DESCRIPTION OF THE DRAWINGS

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 illustrates an exemplary network diagram illustrating an example network environment for optimized feedback integration, in accordance with one or more example embodiments of the present disclosure.
FIGs. 2A, 2B, 2C, and 2D depict illustrative schematic diagrams for optimized feedback integration, in accordance with one or more example embodiments of the present disclosure.
FIG. 3 illustrates an exemplary flow diagram of a process for an illustrative optimized feedback integration system, in accordance with one or more example embodiments of the present disclosure.
FIG. 4 illustrates an exemplary functional diagram of an exemplary communication station that may be suitable for use as a user device, in accordance with one or more example embodiments of the present disclosure.
FIG. 5 illustrates an exemplary block diagram of an example machine upon which any of one or more techniques (e.g., methods) may be performed, in accordance with one or more example embodiments of the present disclosure.
FIG. 6 illustrates an exemplary block diagram of a radio architecture in accordance with some examples.
FIG. 7 illustrates an exemplary front-end module circuitry for use in the radio architecture of FIG. 6, in accordance with one or more example embodiments of the present disclosure.
FIG. 8 illustrates an exemplary radio IC circuitry for use in the radio architecture of FIG. 6, in accordance with one or more example embodiments of the present disclosure.
FIG. 9 illustrates an exemplary baseband processing circuitry for use in the radio architecture of FIG. 6, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

In various aspects, the following is proposed in UHR for initial control frame and initial control response:
- use Multi-Station Block Acknowledgement (M-STA Block Ack or M-STA BA) frame for Initial Control Response frame (ICR) for downlink (DL) and uplink (UL), at least when carrying feedbacks (e.g., unavailability feedback).
- use Buffer Status Report Poll (BSRP) Trigger frame as a UHR Initial Control frame (ICF) sent from an access point (AP) for soliciting response in Trigger-Based Physical Protocol Data Unit (TB PPDU) format from one or more scheduled stations (STAs), and to allow an M-STA BA frame to be included in the TB PPDU sent by the UHR scheduled STAs in response, when carrying feedback (i.e. unavailability) information or when the response is protected.
- use BSRP Trigger frame as a UHR Initial Control frame (ICF) sent from an AP for soliciting response in non-High-Throughput Duplicate Physical Protocol Data Unit (non-HT Dup PPDU) format from a single STA, and to allow an M-STA BA frame to be included in the non-HT Dup PPDU sent by the UHR scheduled STAs in response, when carrying feedback (i.e. unavailability) information or when the response is protected.
- support that BSRP Trigger as ICF can indicate whether the responding PPDU is non-HT duplicate PPDU if only one STA is ICF's Transmit Opportunity (TXOP) responder?
- support that BSRP Trigger is used as ICF transmitted by a non-AP STA when soliciting the feedback (i.e. unavailability feedback) from its associated mobile AP?
- support that BSRP Trigger as ICF addressed to a mobile AP shall solicit the non-HT duplicate PPDU?

In various aspects, there are two following usages of BSRP Trigger frame with a response with a M-STA BA frame:
- A Dynamic Unavailability Operation (DUO) non-AP STA that is operating in the DUO mode and that receives, from its associated DUO Supporting AP, a BSRP Trigger frame that is individually addressed to the STA and solicits a response in non-HT (duplicate) PPDU format shall respond subject to the rules defined in 26.5.2.5 Uplink Multi-User Carrier Sense (UL MU CS) mechanism, and the response shall be in non-HT (duplicate) PPDU format and shall include a Multi-STA BA frame.
- A DUO non-AP STA that is operating in the DUO mode and that is a TXOP responder may indicate, in a response Multi-STA BA frame, whether the non-AP STA will be unavailable after a specific point in time and, if known, for how long, by including a Per-Association Identifier (AID) Traffic Identifier (TID) Info field that contains an Unavailability Target Start Time and Unavailability Duration (see 9.3.1.8.6)) (Multi-STA BA variant).

Mode 1. When the STA receives a BSRP trigger frame soliciting TB PPDU, it can respond with a PPDU that contains an Aggregated MAC Protocol Data Unit (A-MPDU) and aggregate one or more QoS Null frame(s) that will carry the buffer status report and a Multi-STA BA frame that will carry for instance the unavailability information.

Mode 2. When the STA receives a BSRP trigger frame soliciting non-HT (Dup) PPDU, it cannot include an A-MPDU (not allowed with non-HT PPDU) and therefore can only include in the response the Multi-STA BA frame that will carry for instance the unavailability information. In that case, the STA cannot include the BSR information like it does with the other mode.

Example embodiments of the present disclosure relate to systems, methods, and devices for Buffer status report in Multi-STA BA.

In one embodiment, an optimized feedback integration system may include the Buffer Status Report (BSR) information directly in the MSTA BA frame so that the STA can provide the buffer information to the AP even with this mode 2.

In various aspects, it is proposed to define a way so that a STA can include in a Multi-STA BA frame that it transmits the buffer status information for one or more traffic identifiers (TIDs), possibly in addition to other feedback information that it would provide such as unavailability information.

This BSR information can be included especially in response to a BSRP Trigger frame soliciting a response in non-HT Dup PPDU, where the STA cannot aggregate the Multi-STA BA frame with QoS Null frames that are currently used to carry the BSR.

This BSR information can also be included if the STA transmits a Multi-STA BA in response to data or management frames for instance.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

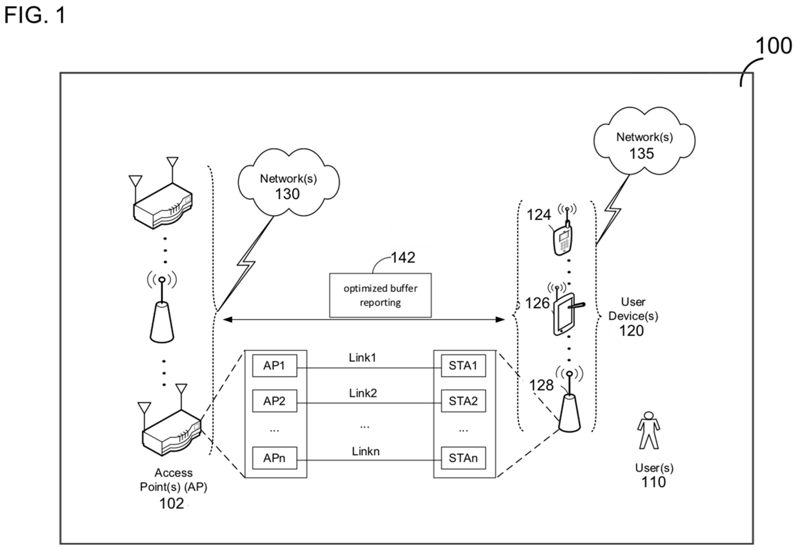

FIG. 1 shows an exemplary network diagram illustrating an example network environment of optimized feedback integration, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

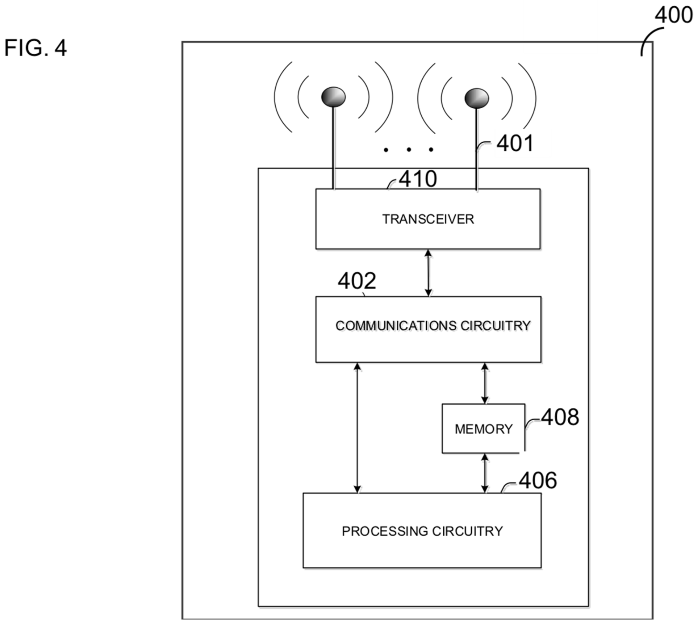

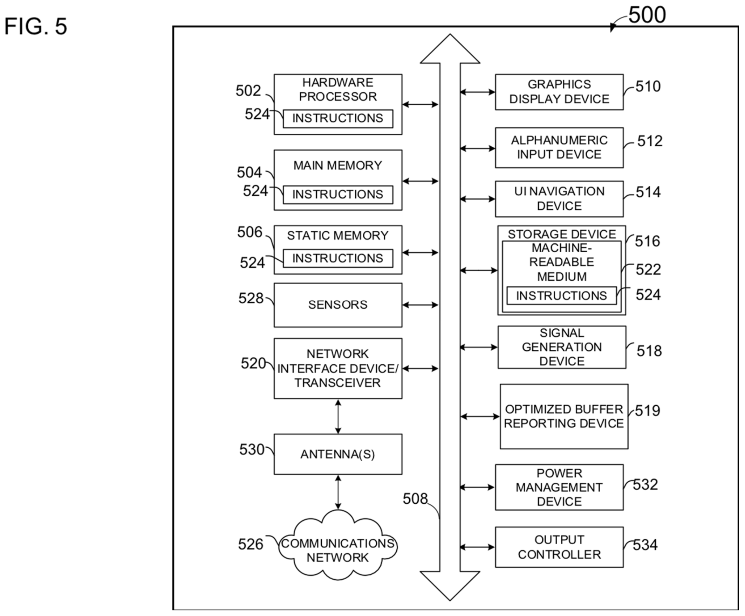

In some embodiments, the user devices 120 and the AP 102 may include one or more computer systems similar to that of the functional diagram of FIG. 4 and/or the example machine/system of FIG. 5.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

Multiple-input multiple-output (MIMO) beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, 802.11bn, etc.), 6 GHz channels (e.g., 802.11ax, 802.11be, 802.11bn, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement an optimized feedback integration 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for the purposes of illustration and are not meant to be limiting.

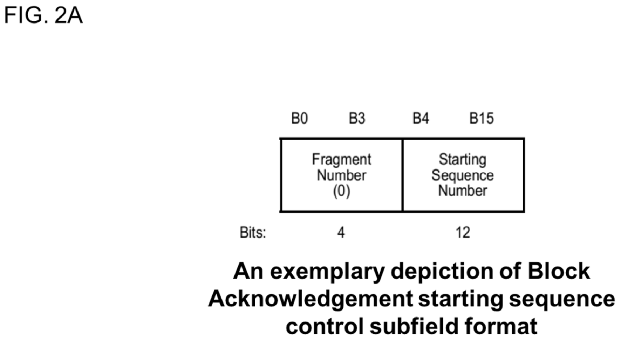

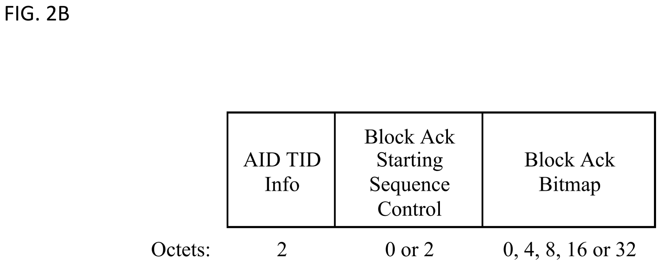

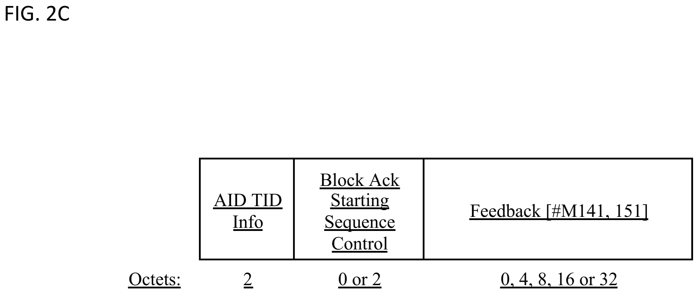

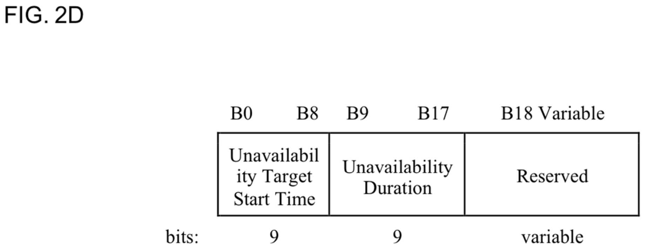

FIGs. 2A, 2B, 2C, and 2D depict illustrative schematic diagrams for optimized feedback integration, in accordance with one or more example embodiments of the present disclosure.

In one or more embodiments, an optimized feedback integration system may facilitate to define a way so that a STA can include in a Multi-STA BA frame that it transmits the buffer status information for one or more traffic identifiers (TIDs), possibly in addition to other feedback information that it would provide such as unavailability information.

This BSR information can be included especially in response to a BSRP Trigger frame soliciting a response in non-HT Dup PPDU, where the STA cannot aggregate the Mutli-STA BA frame with QoS Null frames that are currently used to carry the BSR.

This BSR information can also be included if the STA transmits a Mulit-STA BA in response to data or management frames for instance.

In Table 9-39, it is defined that if the STA includes a Per AID TID Info subfield in the Multi-STA BA frame with the Ack Type field set to 0 and the TID Subfield set to 13, then the Per AID TID Info field does not contain a Block Acknowledgement Bitmap field but a Feedback field, as illustrated in FIG. 2C, and the feedback field includes the Unavailability information.

In various aspects, there are multiple solutions to include the BSR information in the Multi-STA BA frame.

### Solution 1:

One solution is to include this in the same Per AID TID Info field as the unavailability, meaning in the Per AID TID Info subfield that has the Ack Type set to 0 and TID set to 13.

In that case, the Per AID TID Info subfield includes a Stating Sequence Control subfield that includes a Fragment Number and a Stating Sequence Number field. The fragment number is already used to determine the length of the Per AID TID Info.

In one or more embodiments, an optimized feedback integration system may facilitate to repurpose the Stating Sequence Number field of 12 bits to include a Bitmap of Feedback types that are included or not in the Feedback field in the same Per AID TID Info field.

For instance,
- the first bit of the Starting Sequence number field is a bit dedicated to Unavailability information and that is set to 1 if the Unavailability info is included and 0 otherwise. It is possible to also use that bit and define a 1-bit field that is named Unavailability Feedback Present field.
- The second bit of the Starting Sequence number field is a bit dedicated to Buffer Status and is set to 1 if the Buffer Status Report is included and 0 otherwise. It is also possible to use that bit and define a 1-bit field that is named BSR Present field.

- - Alternatively, it is possible to use 8 bits for BSR feedback and include at the same time the information about the TID. (Bit 0 is a TID0 BSR present field, Bit 1 is a TID1 BSR present field ...).

In various aspects, FIG. 2A depicts an exemplary Block Ack Starting Sequence Control subfield format.

In various aspects, Block Ack Starting Sequence Control subfield could become for instance as follows instead of as being depicted in FIG. 2A:

| Fragment Number | Unavailability Feedback Present | BSR TID0 Feedback | ... | BSR TID7 Feedback | Reserved |
|---|---|---|---|---|---|
| 4 bits | 1 bit | 1 bit | ... | 1 bit | 3 bits |

Or

| Fragment Number | Unavailability Feedback Present | BSR Feedback | Reserved |
|---|---|---|---|
| 4 bits | 1 bit | 1 bit | 10 its |

If the Present field is set to 1, then the information is carried in the Feedback field, in the order of the fields in the Starting Sequence Number field. For example, if the Unavailability present field is set to 1 and the BSR TID0 and BSR TID8 is present, then the feedback field is made of consecutive fields in the following order: fields for unavailability (unavailability Start Time and Unavailability Duration fields), fields for BSR TID0 (Queue Size field), fields for BSR TID8 (Queue Size field).

The BSR fields that are included in the Feedback field for a particular TID is a Queue Size field of size 8 bits that is the same as the Queue Size field that is included in the QoS Control field. Alternatively, it could also be Queue Size fields as in BSR A-Control fields.

For instance, the Feedback field in the example above can be as follows:

| Unavailability Start time | Unavailability Duration | Queue Size (For TID0) | Queue Size (For TID8) |
|---|---|---|---|
| 9 bits | 9 bits | 8 bits | 8 bits |

### Feedback field encoding.

### Solution 2:

Another solution is to include the information about the Feedbacks that are included in the Feedback field, instead or in addition to the information included in the Block Ack Starting Sequence Control subfield.

In that case, the beginning of the Feedback field would include the Presence fields that constitute the Feedback field, similarly to solution 1 in the Block Ack Starting Sequence Control field:

| Presence/Control field | Feedback Type fields |
|---|---|
| 8 or more bits | variable |

### Feedback field encoding.

For instance, with example above:

| Unavailability Present | BSR Present | Reserved |
|---|---|---|
| Set to 1 | Set to 1 | ... |

### Presence/Control field encoding.

The Presence/Control field is then followed by an Unavailability Type field and a BSR Type field.

| Unavailability Start Time | Unavailability duration |
|---|---|
| 9 bits | 9 bits |

Feedback Type field for Unavailability (included right after the Presence/Control field).

| TID Bitmap | Queue size | Queue Size |
|---|---|---|
| 8 bits | 8 bits | 8 bits |
| Each bit set to 1 if the Queue size for the corresponding TID is included (in this example, bit 0 and bit 7 are set to 1) | For the first TID (TID0 in the example) | For the second TID (TID7 in the example) |

### BSR Type field (included right after the Unavailability Type field).

Different variants of the above are possible, with putting in different places the indication that there are BSR feedbacks included or not, and for which TIDs the BSR are included (can be included in the same Presence field (8 bits needed for BSR presence indication) or in a different place in the Feedback field, ...).

If one of the intended receiving STA does not support all the feedback and is part of a generation that does not support all the feedback types that are intended to be included in the MSTA BA frame, then the transmitter needs to include consecutive Per AID TID info fields, the first one carrying the feedbacks that are supported by all intended receiving STAs, and the following one carrying the feedbacks that are supported by a smaller group of intended receiving STAs, ensuring this way a forward compatibility (with a bit more overhead).

### Solution 3 (forward compatible with reduced overhead):

It is proposed that the Feedback field is always constituted of Per Type Feedback fields, that are variable in size and that always have the same structure for all Feedbacks and that are included one after the other. The structure is to have a first field indicating the type of feedback (Feedback Type field), the second one indicating the length of the feedback (Feedback Length field), and the last field being the container for the Fields containing the useful feedbacks for the feedback type:

| Feedback Type | Feedback length | Feedback Useful field |
|---|---|---|
| 8 bits or so | 8 bits | Variable (depending on Feedback Type) |

### Per Type Feedback field.

With this structure, even if a receiving STA does not understand a particular type, with the length field it can discard the following bytes and re-synch on the start of the next Per Type Feedback field.

For instance, for Unavailability Type, the Feedback length would be 18 bits (or 3 bytes if it is needed to stay byte aligned), and the Feedback Useful field would include the 2 Unavailability fields (Unavailability Start time and Unavailability Duration field).

For instance, for the BSR Type, the Feedback Type would be set to BSR, the Feedback length depending on the number of TIDs for which the BSR is provided, and the Feedback Useful field would include first a TID bitmap field of 8 bits with each bit corresponding to a TID and set to 1 if the Queue size field is present for that TID, and then would include all the Queue Size fields for each of the TID for which the corresponding bit is set to 1 in the TID Bitmap field, in increasing order to TID values ( in this example, starting from Queue size for TID 0 and then for TID7).

The following tables are already agreed in the 802.11bn specification ("spec") and are there to better understand the encoding of this disclosure.

**Table 9-39 - Context of the Per AID TID Info subfield and presence of optional subfields if the AID11 subfield is not 2045(11ax).**

| **Ack Type subfield values** | **TID subfield values** | **Presence of Block Ack Starting Sequence Control subfield Block Ack Bitmap subfields** | **Context of a Per AID TID Info subfield in a Multi-STA BlockAck frame** |
|---|---|---|---|
| 0 | 0-7 | Present | Block acknowledgment context: |
| | | | Sent as an acknowledgment to QoS Data frames that solicit a BlockAck frame response or to a Block Acknowledgement Request (BlockAckReq) frame. |
| 1 | 0-7 | Not present | Acknowledgment context: |
| | | | Sent as an acknowledgment to a QoS Data or QoS Null frame that solicits an Ack frame response. |
| 0 or 1 | 8-12 | N/A | Reserved |
| 0 | 13 | Present | Feedback context: |
| | | | Sent as feedback (e.g. of unavailability) |
| 1 | 13 | Not Present | Reserved |
| 0 | 14 | N/A | Reserved |
| 1 | 14 | Not present | All ack context: |
| | | | Sent as an acknowledgment to an A-MPDU that contains an MPDU that solicits an immediate response and all MPDUs contained in the A-MPDU are received successfully. |
| 0 | 15 | N/A | Reserved |
| 1 | 15 | Not present | Management/PS-Poll frame acknowledgment context: |
| | | | Sent as an acknowledgment to a Management or PS-Poll frame. |
| NOTE 1-Additional rules for acknowledgment, block acknowledgment and the all ack context are defined in 26.4.2 (Acknowledgment context in a Multi-STA BlockAck frame) for a multi-TID A-MPDU. | | | |
| NOTE 2-As HE STAs do not use HCCA (see 10.23.1 (General)), TID values from 8 to 15 are not used in QoS Data frames. | | | |

If the AID11 subfield of the AID TID Info subfield is not 2045, and if the combination of the Ack Type subfield and TID subfield is not equal to 0 and 13 respectively then the Per AID TID Info subfield has the format shown in FIG. 2B (Per AID TID Info subfield format if the AID11 subfield is not 2045(11ax)).

FIG. 2B depicts an exemplary Per AID TID Info subfield format if the AID11 subfield is not 2045 and if the combination of the Ack Type subfield and TID subfield is not equal to 0 and 13 respectively.

If the AID11 subfield of the AID TID Info subfield is not 2045, and if the Ack Type subfield is equal to 0 and the TID subfield is equal to 13 then the Per AID TID Info subfield has the format shown in FIG. 2C (Per AID TID Info subfield format if the AID11 subfield is not 2045(11ax)).

In various aspects, FIG. 2C depicts an exemplary Per AID TID Info subfield format if the AID11 subfield is not 2045 and if the Ack Type subfield is equal to 0 and the TID subfield is equal to 13.

In various aspects, FIG. 2D depicts an exemplary feedback subfield format including Unavailability information.

It is understood that the above descriptions are for the purposes of illustration and are not meant to be limiting.

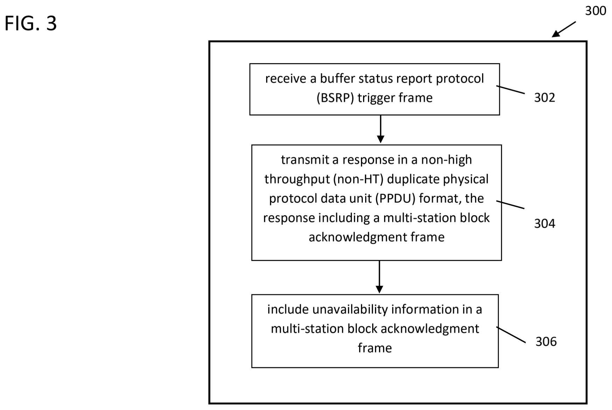

FIG. 3 illustrates an exemplary flow diagram of illustrative process 300 for an optimized feedback integration system, in accordance with one or more example embodiments of the present disclosure.

At block 302, a device (e.g., the user device(s) 120 and/or the AP 102 of FIG. 1 and/or the optimized feedback integration device 519 of FIG. 5) may receive a buffer status report protocol (BSRP) trigger frame.

At block 304, the device may transmit a response in a non-high throughput (non-HT) duplicate physical protocol data unit (PPDU) format, the response including a multi-station block acknowledgment frame.

At block 306, the device may include unavailability information in a multi-station block acknowledgment frame.

In various aspects, FIG. 3 shows an exemplary flowchart of an implementation of a method for an optimized feedback integration system including computer-implemented steps of receiving a buffer status report protocol (BSRP) trigger frame (302); transmitting a response in a non-high throughput (non-HT) duplicate physical protocol data unit (PPDU) format, the response including a multi-station block acknowledgment frame (304); and including unavailability information in a multi-station block acknowledgment frame (306).

It is understood that the above descriptions are for the purposes of illustration and are not meant to be limiting.

FIG. 4 shows an exemplary functional diagram of an exemplary communication station 400, in accordance with one or more example embodiments of the present disclosure. In one embodiment, FIG. 4 illustrates an exemplary functional block diagram of a communication station that may be suitable for use as an AP 102 (FIG. 1) or a user device 120 (FIG. 1) in accordance with some embodiments. The communication station 400 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 400 may include communications circuitry 402 and a transceiver 410 for transmitting and receiving signals to and from other communication stations using one or more antennas 401. The communications circuitry 402 may include circuitry that can operate the physical layer (PHY) communications and/or medium access control (MAC) communications for controlling access to the wireless medium, and/or any other communications layers for transmitting and receiving signals. The communication station 400 may also include processing circuitry 406 and memory 408 arranged to perform the operations described herein. In some embodiments, the communications circuitry 402 and the processing circuitry 406 may be configured to perform operations detailed in the above figures, diagrams, and flows.

In accordance with some embodiments, the communications circuitry 402 may be arranged to contend for a wireless medium and configure frames or packets for communicating over the wireless medium. The communications circuitry 402 may be arranged to transmit and receive signals. The communications circuitry 402 may also include circuitry for modulation/demodulation, upconversion/downconversion, filtering, amplification, etc. In some embodiments, the processing circuitry 406 of the communication station 400 may include one or more processors. In other embodiments, two or more antennas 401 may be coupled to the communications circuitry 402 arranged for sending and receiving signals. The memory 408 may store information for configuring the processing circuitry 406 to perform operations for configuring and transmitting message frames and performing the various operations described herein. The memory 408 may include any type of memory, including non-transitory memory, for storing information in a form readable by a machine (e.g., a computer). For example, the memory 408 may include a computer-readable storage device, read-only memory (ROM), random-access memory (RAM), magnetic disk storage media, optical storage media, flash-memory devices and other storage devices and media.

In some embodiments, the communication station 400 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 400 may include one or more antennas 401. The antennas 401 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 400 may include one or more of a keyboard, a display, a non-volatile memory port, multiple antennas, a graphics processor, an application processor, speakers, and other mobile device elements. The display may be an LCD screen including a touch screen.

Although the communication station 400 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 400 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 400 may include one or more processors and may be configured with instructions stored on a computer-readable storage device.

FIG. 5 illustrates a block diagram of an example of a machine 500 or system upon which any one or more of the techniques (e.g., methodologies) discussed herein may be performed. In other embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environments. The machine 500 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 500 may include a hardware processor 502 (e.g., a central processing unit (CPU), a graphics processing unit (GPU), a hardware processor core, or any combination thereof), a main memory 504 and a static memory 506, some or all of which may communicate with each other via an interlink (e.g., bus) 508. The machine 500 may further include a power management device 532, a graphics display device 510, an alphanumeric input device 512 (e.g., a keyboard), and a user interface (UI) navigation device 514 (e.g., a mouse). In an example, the graphics display device 510, alphanumeric input device 512, and UI navigation device 514 may be a touch screen display. The machine 500 may additionally include a storage device (i.e., drive unit) 516, a signal generation device 518 (e.g., a speaker), an optimized feedback integration device 519, a network interface device/transceiver 520 coupled to antenna(s) 530, and one or more sensors 528, such as a global positioning system (GPS) sensor, a compass, an accelerometer, or other sensor. The machine 500 may include an output controller 534, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 502 for generation and processing of the baseband signals and for controlling operations of the main memory 504, the storage device 516, and/or the optimized feedback integration device 519. The baseband processor may be provided on a single radio card, a single chip, or an integrated circuit (IC).

The storage device 516 may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within the static memory 506, or within the hardware processor 502 during execution thereof by the machine 500. In an example, one or any combination of the hardware processor 502, the main memory 504, the static memory 506, or the storage device 516 may constitute machine-readable media.

The optimized feedback integration device 519 may carry out or perform any of the operations and processes (e.g., process 300) described and shown above.

It is understood that the above are only a subset of what the optimized feedback integration device 519 may be configured to perform and that other functions included throughout this disclosure may also be performed by the optimized feedback integration device 519.

While the machine-readable medium 522 is illustrated as a single medium, the term "machine-readable medium" may include a single medium or multiple media (e.g., a centralized or distributed database, and/or associated caches and servers) configured to store the one or more instructions 524.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 500 and that cause the machine 500 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 524 may further be transmitted or received over a communications network 526 using a transmission medium via the network interface device/transceiver 520 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 520 may include one or more physical jacks (e.g., Ethernet, coaxial, or phone jacks) or one or more antennas to connect to the communications network 526. In an example, the network interface device/transceiver 520 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 500 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

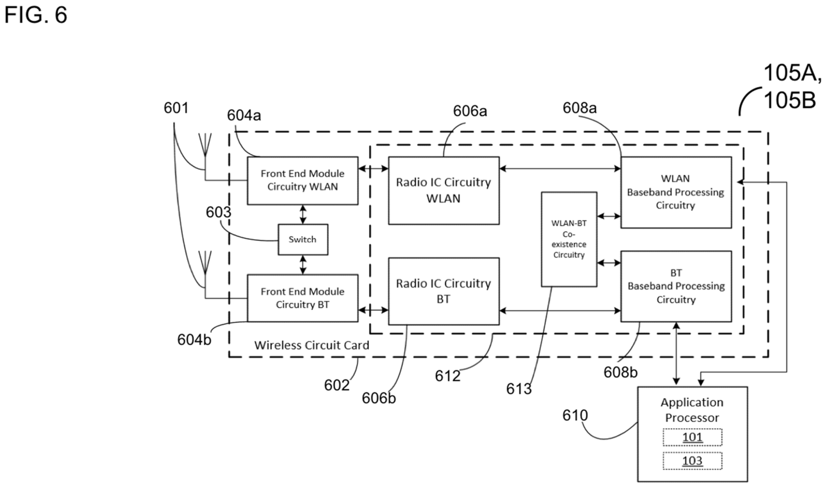

FIG. 6 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 604a-b, radio IC circuitry 606a-b and baseband processing circuitry 608a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 604a-b may include a WLAN or Wi-Fi FEM circuitry 604a and a Bluetooth (BT) FEM circuitry 604b. The WLAN FEM circuitry 604a may include a receive signal path comprising circuitry configured to operate on WLAN RF signals received from one or more antennas 601, to amplify the received signals and to provide the amplified versions of the received signals to the WLAN radio IC circuitry 606a for further processing. The BT FEM circuitry 604b may include a receive signal path which may include circuitry configured to operate on BT RF signals received from one or more antennas 601, to amplify the received signals and to provide the amplified versions of the received signals to the BT radio IC circuitry 606b for further processing. FEM circuitry 604a may also include a transmit signal path which may include circuitry configured to amplify WLAN signals provided by the radio IC circuitry 606a for wireless transmission by one or more of the antennas 601. In addition, FEM circuitry 604b may also include a transmit signal path which may include circuitry configured to amplify BT signals provided by the radio IC circuitry 606b for wireless transmission by the one or more antennas. In the embodiment of FIG. 6, although FEM 604a and FEM 604b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 606a-b as shown may include WLAN radio IC circuitry 606a and BT radio IC circuitry 606b. The WLAN radio IC circuitry 606a may include a receive signal path which may include circuitry to down-convert WLAN RF signals received from the FEM circuitry 604a and provide baseband signals to WLAN baseband processing circuitry 608a. BT radio IC circuitry 606b may in turn include a receive signal path which may include circuitry to down-convert BT RF signals received from the FEM circuitry 604b and provide baseband signals to BT baseband processing circuitry 608b. WLAN radio IC circuitry 606a may also include a transmit signal path which may include circuitry to up-convert WLAN baseband signals provided by the WLAN baseband processing circuitry 608a and provide WLAN RF output signals to the FEM circuitry 604a for subsequent wireless transmission by the one or more antennas 601. BT radio IC circuitry 606b may also include a transmit signal path which may include circuitry to up-convert BT baseband signals provided by the BT baseband processing circuitry 608b and provide BT RF output signals to the FEM circuitry 604b for subsequent wireless transmission by the one or more antennas 601. In the embodiment of FIG. 6, although radio IC circuitries 606a and 606b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 608a-b may include a WLAN baseband processing circuitry 608a and a BT baseband processing circuitry 608b. The WLAN baseband processing circuitry 608a may include a memory, such as, for example, a set of RAM arrays in a Fast Fourier Transform or Inverse Fast Fourier Transform block (not shown) of the WLAN baseband processing circuitry 608a. Each of the WLAN baseband circuitry 608a and the BT baseband circuitry 608b may further include one or more processors and control logic to process the signals received from the corresponding WLAN or BT receive signal path of the radio IC circuitry 606a-b, and to also generate corresponding WLAN or BT baseband signals for the transmit signal path of the radio IC circuitry 606a-b. Each of the baseband processing circuitries 608a and 608b may further include physical layer (PHY) and medium access control layer (MAC) circuitry, and may further interface with a device for generation and processing of the baseband signals and for controlling operations of the radio IC circuitry 606a-b.

Referring still to FIG. 6, according to the shown embodiment, WLAN-BT coexistence circuitry 613 may include logic providing an interface between the WLAN baseband circuitry 608a and the BT baseband circuitry 608b to enable use cases requiring WLAN and BT coexistence. In addition, a switch 603 may be provided between the WLAN FEM circuitry 604a and the BT FEM circuitry 604b to allow switching between the WLAN and BT radios according to application needs. In addition, although the antennas 601 are depicted as being respectively connected to the WLAN FEM circuitry 604a and the BT FEM circuitry 604b, embodiments include within their scope the sharing of one or more antennas as between the WLAN and BT FEMs, or the provision of more than one antenna connected to each of FEM 604a or 604b.

In some embodiments, the front-end module circuitry 604a-b, the radio IC circuitry 606a-b, and baseband processing circuitry 608a-b may be provided on a single radio card, such as wireless radio card 602. In some other embodiments, the one or more antennas 601, the FEM circuitry 604a-b and the radio IC circuitry 606a-b may be provided on a single radio card. In some other embodiments, the radio IC circuitry 606a-b and the baseband processing circuitry 608a-b may be provided on a single chip or integrated circuit (IC), such as IC 612.

In some embodiments, the wireless radio card 602 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 608b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

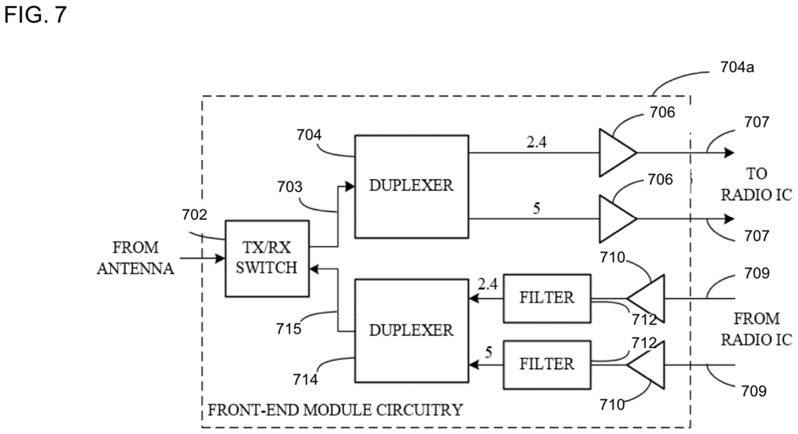

FIG. 7 illustrates WLAN FEM circuitry 604a in accordance with some embodiments. Although the example of FIG. 7 is described in conjunction with the WLAN FEM circuitry 604a, the example of FIG. 7 may be described in conjunction with the example BT FEM circuitry 604b (FIG. 6), although other circuitry configurations may also be suitable.

In some embodiments, the FEM circuitry 604a may include a TX/RX switch 702 to switch between transmit mode and receive mode operation. The FEM circuitry 604a may include a receive signal path and a transmit signal path. The receive signal path of the FEM circuitry 604a may include a low-noise amplifier (LNA) 706 to amplify received RF signals 703 and provide the amplified received RF signals 707 as an output (e.g., to the radio IC circuitry 606a-b (FIG. 6)). The transmit signal path of the circuitry 604a may include a power amplifier (PA) to amplify input RF signals 709 (e.g., provided by the radio IC circuitry 606a-b), and one or more filters 712, such as band-pass filters (BPFs), low-pass filters (LPFs) or other types of filters, to generate RF signals 715 for subsequent transmission (e.g., by one or more of the antennas 601 (FIG. 6)) via an example duplexer 714.

In some dual-mode embodiments for Wi-Fi communication, the FEM circuitry 604a may be configured to operate in either the 2.4 GHz frequency spectrum or the 5 GHz frequency spectrum. In these embodiments, the receive signal path of the FEM circuitry 604a may include a receive signal path duplexer 704 to separate the signals from each spectrum as well as provide a separate LNA 706 for each spectrum as shown. In these embodiments, the transmit signal path of the FEM circuitry 604a may also include a power amplifier 710 and a filter 712, such as a BPF, an LPF or another type of filter for each frequency spectrum and a transmit signal path duplexer 704 to provide the signals of one of the different spectrums onto a single transmit path for subsequent transmission by the one or more of the antennas 601 (FIG. 6). In some embodiments, BT communications may utilize the 2.4 GHz signal paths and may utilize the same FEM circuitry 604a as the one used for WLAN communications.

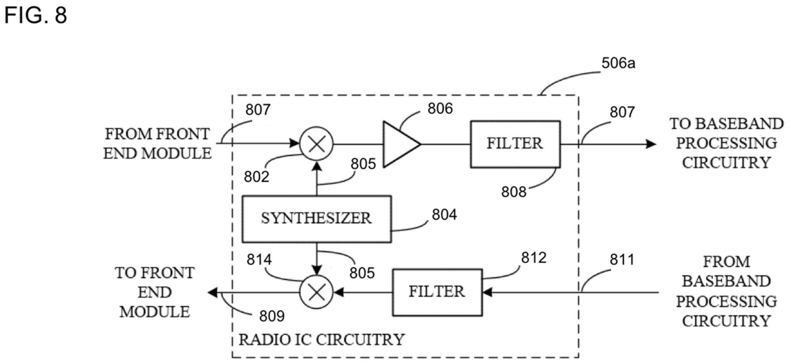

FIG. 8 illustrates radio IC circuitry 606a in accordance with some embodiments. The radio IC circuitry 606a is one example of circuitry that may be suitable for use as the WLAN or BT radio IC circuitry 606a/606b (FIG. 6), although other circuitry configurations may also be suitable. Alternatively, the example of FIG. 8 may be described in conjunction with the example BT radio IC circuitry 606b.

In some embodiments, the radio IC circuitry 606a may include a receive signal path and a transmit signal path. The receive signal path of the radio IC circuitry 606a may include at least mixer circuitry 802, such as, for example, down-conversion mixer circuitry, amplifier circuitry 806 and filter circuitry 808. The transmit signal path of the radio IC circuitry 606a may include at least filter circuitry 812 and mixer circuitry 814, such as, for example, up-conversion mixer circuitry. Radio IC circuitry 606a may also include synthesizer circuitry 804 for synthesizing a frequency 805 for use by the mixer circuitry 802 and the mixer circuitry 814. The mixer circuitry 802 and/or 814 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 8 illustrates only a simplified version of a radio IC circuitry, and may include, although not shown, embodiments where each of the depicted circuitries may include more than one component. For instance, mixer circuitry 814 may each include one or more mixers, and filter circuitries 808 and/or 812 may each include one or more filters, such as one or more BPFs and/or LPFs according to application needs. For example, when mixer circuitries are of the direct-conversion type, they may each include two or more mixers.

In some embodiments, mixer circuitry 802 may be configured to down-convert RF signals 807 received from the FEM circuitry 604a-b (FIG. 6) based on the synthesized frequency 805 provided by synthesizer circuitry 804. The amplifier circuitry 806 may be configured to amplify the down-converted signals and the filter circuitry 808 may include an LPF configured to remove unwanted signals from the down-converted signals to generate output baseband signals 807. Output baseband signals 807 may be provided to the baseband processing circuitry 608a-b (FIG. 6) for further processing. In some embodiments, the output baseband signals 807 may be zero-frequency baseband signals, although this is not a requirement. In some embodiments, mixer circuitry 802 may comprise passive mixers, although the scope of the embodiments is not limited in this respect.

In some embodiments, the mixer circuitry 814 may be configured to up-convert input baseband signals 811 based on the synthesized frequency 805 provided by the synthesizer circuitry 804 to generate RF output signals 709 for the FEM circuitry 604a-b. The baseband signals 811 may be provided by the baseband processing circuitry 608a-b and may be filtered by filter circuitry 812. The filter circuitry 812 may include an LPF or a BPF, although the scope of the embodiments is not limited in this respect.

In some embodiments, the mixer circuitry 802 and the mixer circuitry 814 may each include two or more mixers and may be arranged for quadrature down-conversion and/or up-conversion respectively with the help of synthesizer 804. In some embodiments, the mixer circuitry 802 and the mixer circuitry 814 may each include two or more mixers each configured for image rejection (e.g., Hartley image rejection). In some embodiments, the mixer circuitry 802 and the mixer circuitry 814 may be arranged for direct down-conversion and/or direct up-conversion, respectively. In some embodiments, the mixer circuitry 802 and the mixer circuitry 814 may be configured for super-heterodyne operation, although this is not a requirement.

Mixer circuitry 802 may comprise, according to one embodiment: quadrature passive mixers (e.g., for the in-phase (I) and quadrature phase (Q) paths). In such an embodiment, RF input signal 807 from FIG. 8 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 805 of synthesizer 804 (FIG. 8). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 707 (FIG. 7) may comprise a balanced signal, although the scope of the embodiments is not limited in this respect. The I and Q baseband output signals may be provided to low-noise amplifier, such as amplifier circuitry 806 (FIG. 8) or to filter circuitry 808 (FIG. 8).

In some embodiments, the output baseband signals 807 and the input baseband signals 811 may be analog baseband signals, although the scope of the embodiments is not limited in this respect. In some alternate embodiments, the output baseband signals 807 and the input baseband signals 811 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 804 may be a fractional-N synthesizer or a fractional N/N+1 synthesizer, although the scope of the embodiments is not limited in this respect as other types of frequency synthesizers may be suitable. For example, synthesizer circuitry 804 may be a delta-sigma synthesizer, a frequency multiplier, or a synthesizer comprising a phase-locked loop with a frequency divider. According to some embodiments, the synthesizer circuitry 804 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 804 may be provided by a voltage controlled oscillator (VCO), although that is not a requirement. A divider control input may further be provided by either the baseband processing circuitry 608a-b (FIG. 6) depending on the desired output frequency 805. In some embodiments, a divider control input (e.g., N) may be determined from a look-up table (e.g., within a Wi-Fi card) based on a channel number and a channel center frequency as determined or indicated by the example application processor 610. The application processor 610 may include, or otherwise be connected to, one of the example secure signal converter 101 or the example received signal converter 103 (e.g., depending on which device the example radio architecture is implemented in).

In some embodiments, synthesizer circuitry 804 may be configured to generate a carrier frequency as the output frequency 805, while in other embodiments, the output frequency 805 may be a fraction of the carrier frequency (e.g., one-half the carrier frequency, one-third the carrier frequency). In some embodiments, the output frequency 805 may be a LO frequency (fLO).

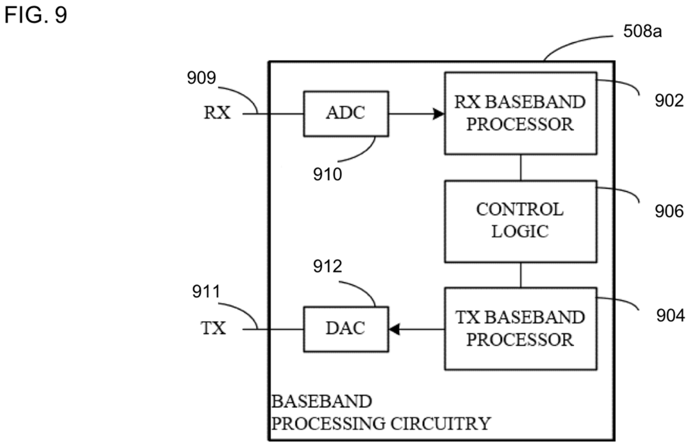

FIG. 9 illustrates an exemplary functional block diagram of baseband processing circuitry 608a in accordance with some embodiments. The baseband processing circuitry 608a is one example of circuitry that may be suitable for use as the baseband processing circuitry 608a (FIG. 6), although other circuitry configurations may also be suitable. Alternatively, the example of FIG. 8 may be used to implement the example BT baseband processing circuitry 608b of FIG. 6.

The baseband processing circuitry 608a may include a receive baseband processor (RX BBP) 902 for processing receive baseband signals 809 provided by the radio IC circuitry 606a-b (FIG. 6) and a transmit baseband processor (TX BBP) 904 for generating transmit baseband signals 811 for the radio IC circuitry 606a-b. The baseband processing circuitry 608a may also include control logic 906 for coordinating the operations of the baseband processing circuitry 608a.

In some embodiments (e.g., when analog baseband signals are exchanged between the baseband processing circuitry 608a-b and the radio IC circuitry 606a-b), the baseband processing circuitry 608a may include ADC 910 to convert analog baseband signals 909 received from the radio IC circuitry 606a-b to digital baseband signals for processing by the RX BBP 902. In these embodiments, the baseband processing circuitry 608a may also include DAC 912 to convert digital baseband signals from the TX BBP 904 to analog baseband signals 911.

In some embodiments that communicate OFDM signals or OFDMA signals, such as through baseband processor 608a, the transmit baseband processor 904 may be configured to generate OFDM or OFDMA signals as appropriate for transmission by performing an inverse fast Fourier transform (IFFT). The receive baseband processor 902 may be configured to process received OFDM signals or OFDMA signals by performing an FFT. In some embodiments, the receive baseband processor 902 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 6, in some embodiments, the antennas 601 (FIG. 6) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 601 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

In the following, various aspects of this disclosure will be illustrated:
Example 1 is a device. The device includes a processing circuitry or a processor coupled to a storage, the processing circuitry or the processor configured to: receive a buffer status report protocol (BSRP) trigger frame; transmit a response in a non-high throughput (non-HT) duplicate physical protocol data unit (PPDU) format, wherein the response includes a multi-station block acknowledgment frame; and include unavailability information in a multi-station block acknowledgment frame.
Example 2 may include the subject matter of example 1 and/or some other example herein, wherein the processing circuitry may be further configured to aggregate quality of service (QoS) Null frames with the multi-station block acknowledgment frame in response to the BSRP trigger frame.
Example 3 may include the subject matter of any one of example 1 or 2, and/or some other example herein, wherein the multi-station block acknowledgment frame includes buffer status information for one or more traffic identifiers (TIDs).
Example 4 may include the subject matter of any one of examples 1 to 3, and/or some other example herein, wherein the multi-station block acknowledgment frame includes buffer status information in response to data or management frames.
Example 5 may include the subject matter of any one of examples 1 to 4, and/or some other example herein, wherein the BSRP trigger frame may be utilized as an initial control frame to solicit responses from multiple scheduled stations.
Example 6 may include the subject matter of any one of examples 1 to 5, and/or some other example herein, wherein the response is subjected to the rules defined in 26.5.2.5 Uplink Multi-User Carrier Sense (UL MU CS) mechanism.
Example 7 may include the subject matter of example 6 and/or some other example herein, wherein the device is operating in a Dynamic Unavailability Operation (DUO) mode.
Example 8 may include the subject matter of example 6 and/or some other example herein, wherein the response includes a Per-AID (association identifier) TID (traffic identifier) Info field that contains an Unavailability Target Start Time and Unavailability Duration.
Example 9 may include the subject matter of any one of examples 1 to 8, and/or some other example herein, wherein the buffer status information is included in the same Per AID TID Info field as the unavailability information.
Example 10 may include the subject matter of example 9 and/or some other example herein, wherein the inclusion of the buffer status information is based on the Feedback field.
Example 11 may include the subject matter of example 10 and/or some other example herein, wherein the BSR fields that are included in the Feedback field for a particular TID is a Queue Size field of size 8 bits that is the same as the Queue Size field that is included in the QoS Control field.
Example 12 may include the subject matter of example 10 and/or some other example herein, wherein the Queue Size fields are as in BSR A-Control fields.
Example 13 may include the subject matter of any one of examples 1 to 8, and/or some other example herein, wherein the response includes the information about the Feedbacks that are included in the Feedback field, instead or in addition to the information included in the Block Ack Starting Sequence Control subfield.
Example 14 may include the subject matter of example 13 and/or some other example herein, wherein the beginning of the Feedback field would include the Presence fields that constitute the Feedback field.
Example 15 may include the subject matter of example 10, and/or some other example herein, wherein the Feedback field is based on Per Type Feedback fields.
Example 16 may include the subject matter of example 15, and/or some other example herein, wherein the Per Type Feedback fields are for Unavailability type and based on the Feedback length including 18 bits (or 3 bytes if it is needed to stay byte aligned) the Feedback Useful field would include the 2 Unavailability fields (Unavailability Start time and Unavailability Duration field).
Example 17 may include the subject matter of example 15, and/or some other example herein, wherein the Per Type Feedback fields are for Buffer Status Report (BSR) type, wherein the Feedback type is be set to BSR, and based on Feedback Useful field including first a TID bitmap field of 8 bits with each bit corresponding to a TID and set to 1 if the Queue size field is present for that TID, and then including all the Queue Size fields for each of the TID for which the corresponding bit is set to 1 in the TID Bitmap field, in increasing order to TID values ( in this example, starting from Queue size for TID 0 and then for TID7).
Example 18 may include the subject matter of any one of examples 1 to 17, and/or some other example herein, further including a transceiver configured to transmit and receive wireless signals.
Example 19 may include the subject matter of example 18 and/or some other example herein, further including an antenna coupled to the transceiver to cause to send the frame.
Example 20 may include one or more non-transitory computer-readable media having stored thereon instructions that, when executed by one or more processors, cause the one or more processors to: receive a buffer status report protocol (BSRP) trigger frame; transmit a response in a non-high throughput (non-HT) duplicate physical protocol data unit (PPDU) format, wherein the response includes a multi-station block acknowledgment frame; and include unavailability information in a multi-station block acknowledgment frame.
Example 21 may include the subject matter of example 20 and/or some other example herein, wherein the instructions that, when executed by one or more processors, further cause the one or more processors to aggregate quality of service (QoS) Null frames with the multi-station block acknowledgment frame in response to the BSRP trigger frame.
Example 22 may include the subject matter of any one of example 20 or 21, and/or some other example herein, wherein the multi-station block acknowledgment frame includes buffer status information for one or more traffic identifiers (TIDs).
Example 23 may include the subject matter of any one of examples 20 to 22, and/or some other example herein, wherein the multi-station block acknowledgment frame includes buffer status information in response to data or management frames.
Example 24 may include the subject matter of any one of examples 20 to 23, and/or some other example herein, wherein the BSRP trigger frame may be utilized as an initial control frame to solicit responses from multiple scheduled stations.
Example 25 may include the subject matter of any one of examples 20 to 24, and/or some other example herein, wherein the response is subjected to the rules defined in 26.5.2.5 Uplink Multi-User Carrier Sense (UL MU CS) mechanism.
Example 26 may include the subject matter of example 25 and/or some other example herein, wherein the device is operating in a Dynamic Unavailability Operation (DUO) mode.
Example 27 may include the subject matter of example 25 and/or some other example herein, wherein the response includes a Per-AID (association identifier) TID (traffic identifier) Info field that contains an Unavailability Target Start Time and Unavailability Duration.
Example 28 may include the subject matter of any one of examples 20 to 27, and/or some other example herein, wherein the buffer status information is included in the same Per AID TID Info field as the unavailability information.
Example 29 may include the subject matter of example 28 and/or some other example herein, wherein the inclusion of the buffer status information is based on a Feedback field.
Example 30 may include the subject matter of example 29 and/or some other example herein, wherein the BSR fields that are included in the Feedback field for a particular TID is a Queue Size field of size 8 bits that is the same as the Queue Size field that is included in the QoS Control field.
Example 31 may include the subject matter of example 30 and/or some other example herein, wherein the Queue Size fields are as in BSR A-Control fields.
Example 32 may include the subject matter of any one of examples 20 to 31, and/or some other example herein, wherein the response includes the information about the Feedbacks that are included in the Feedback field, instead or in addition to the information included in the Block Ack Starting Sequence Control subfield.
Example 33 may include the subject matter of example 29 and/or some other example herein, wherein the beginning of the Feedback field would include the Presence fields that constitute the Feedback field.
Example 34 may include the subject matter of example 29, and/or some other example herein, wherein the Feedback field is based on Per Type Feedback fields.
Example 35 may include the subject matter of example 34, and/or some other example herein, wherein the Per Type Feedback fields are for Unavailability type and based on the Feedback length including 18 bits (or 3 bytes if it is needed to stay byte aligned) the Feedback Useful field would include the 2 Unavailability fields (Unavailability Start time and Unavailability Duration field).
Example 36 may include the subject matter of example 34, and/or some other example herein, wherein the Per Type Feedback fields are for Buffer Status Report (BSR) type, wherein the Feedback type is be set to BSR, and based on Feedback Useful field including first a TID bitmap field of 8 bits with each bit corresponding to a TID and set to 1 if the Queue size field is present for that TID, and then including all the Queue Size fields for each of the TID for which the corresponding bit is set to 1 in the TID Bitmap field, in increasing order to TID values ( in this example, starting from Queue size for TID 0 and then for TID7).
Example 37 may include a method comprising: receiving a buffer status report protocol (BSRP) trigger frame; transmitting a response in a non-high throughput (non-HT) duplicate physical protocol data unit (PPDU) format, the response including a multi-station block acknowledgment frame; and including unavailability information in a multi-station block acknowledgment frame.
Example 38 may include the subject matter of example 37 and/or some other example herein, further comprising aggregating quality of service (QoS) Null frames with the multi-station block acknowledgment frame in response to the BSRP trigger frame.
Example 39 may include the subject matter of any one of example 37 or 38 and/or some other example herein, wherein the multi-station block acknowledgment frame includes buffer status information for one or more traffic identifiers (TIDs).
Example 40 may include the subject matter of any one of examples 37 to 39, and/or some other example herein, the multi-station block acknowledgment frame includes buffer status information in response to data or management frames.
Example 41 may include the subject matter of any one of examples 37 to 40, and/or some other example herein, wherein the BSRP trigger frame may be utilized as an initial control frame to solicit responses from multiple scheduled stations.
Example 42 may include the subject matter of any one of examples 37 to 41, and/or some other example herein, wherein the response is subjected to the rules defined in 26.5.2.5 Uplink Multi-User Carrier Sense (UL MU CS) mechanism.
Example 43 may include the subject matter of any one of examples 37 to 42, and/or some other example herein, wherein a mode of operation is in a Dynamic Unavailability Operation (DUO) mode.
Example 44 may include the subject matter of any one of examples 37 to 43, and/or some other example herein, wherein the response includes a Per-AID (association identifier) TID (traffic identifier) Info field that contains an Unavailability Target Start Time and Unavailability Duration.
Example 45 may include the subject matter of any one of examples 37 to 44, and/or some other example herein, wherein the buffer status information is included in the same Per AID TID Info field as the unavailability information.
Example 46 may include the subject matter of any one of examples 37 to 45, and/or some other example herein, wherein the inclusion of the buffer status information is based on a Feedback field.
Example 47 may include the subject matter of any one of examples 37 to 46, and/or some other example herein, wherein the BSR fields that are included in the Feedback field for a particular TID is a Queue Size field of size 8 bits that is the same as the Queue Size field that is included in the QoS Control field.
Example 48 may include the subject matter of any one of examples 37 to 47, and/or some other example herein, wherein the Queue Size fields are as in BSR A-Control fields.
Example 49 may include the subject matter of any one of examples 37 to 48, and/or some other example herein, wherein the response includes the information about the Feedbacks that are included in the Feedback field, instead or in addition to the information included in the Block Ack Starting Sequence Control subfield.
Example 50 may include the subject matter of any one of examples 37 to 49, and/or some other example herein, wherein the beginning of the Feedback field would include the Presence fields that constitute the Feedback field.
Example 51 may include the subject matter of any one of examples 37 to 50, and/or some other example herein, wherein the Feedback field is based on Per Type Feedback fields.
Example 52 may include the subject matter of any one of examples 37 to 51, and/or some other example herein, wherein the Per Type Feedback fields are for Unavailability type and based on the Feedback length including 18 bits (or 3 bytes if it is needed to stay byte aligned) the Feedback Useful field would include the 2 Unavailability fields (Unavailability Start time and Unavailability Duration field).
Example 53 may include the subject matter of any one of examples 37 to 52, and/or some other example herein, wherein the Per Type Feedback fields are for Buffer Status Report (BSR) type, wherein the Feedback type is be set to BSR, and based on Feedback Useful field including first a TID bitmap field of 8 bits with each bit corresponding to a TID and set to 1 if the Queue size field is present for that TID, and then including all the Queue Size fields for each of the TID for which the corresponding bit is set to 1 in the TID Bitmap field, in increasing order to TID values ( in this example, starting from Queue size for TID 0 and then for TID7).
Example 54 may include an apparatus comprising means for: receiving a buffer status report protocol (BSRP) trigger frame; transmitting a response in a non-high throughput (non-HT) duplicate physical protocol data unit (PPDU) format, the response including a multi-station block acknowledgment frame; and including unavailability information in a multi-station block acknowledgment frame.
Example 55 may include the subject matter of example 54 and/or some other example herein, further comprising aggregating quality of service (QoS) Null frames with the multi-station block acknowledgment frame in response to the BSRP trigger frame.
Example 56 may include the subject matter of any one of example 54 or 55, and/or some other example herein, wherein the multi-station block acknowledgment frame includes buffer status information for one or more traffic identifiers (TIDs).
Example 57 may include the subject matter of any one of examples 54 to 56, and/or some other example herein, wherein the multi-station block acknowledgment frame includes buffer status information in response to data or management frames.
Example 58 may include the subject matter of any one of examples 54 to 57, and/or some other example herein, wherein the BSRP trigger frame may be utilized as an initial control frame to solicit responses from multiple scheduled stations.
Example 59 may include the subject matter of any one of examples 54 to 58, and/or some other example herein, wherein the response is subjected to the rules defined in 26.5.2.5 Uplink Multi-User Carrier Sense (UL MU CS) mechanism.
Example 60 may include the subject matter of any one of examples 54 to 59, and/or some other example herein, wherein a mode of operation is in a Dynamic Unavailability Operation (DUO) mode.
Example 61 may include the subject matter of any one of examples 54 to 60, and/or some other example herein, wherein the response includes a Per-AID (association identifier) TID (traffic identifier) Info field that contains an Unavailability Target Start Time and Unavailability Duration.
Example 62 may include the subject matter of any one of examples 54 to 61, and/or some other example herein, wherein the buffer status information is included in the same Per AID TID Info field as the unavailability information.
Example 63 may include the subject matter of any one of examples 54 to 62, and/or some other example herein, wherein the inclusion of the buffer status information is based on a Feedback field.
Example 64 may include the subject matter of any one of examples 54 to 63, and/or some other example herein, wherein the BSR fields that are included in the Feedback field for a particular TID is a Queue Size field of size 8 bits that is the same as the Queue Size field that is included in the QoS Control field.
Example 65 may include the subject matter of any one of examples 54 to 64, and/or some other example herein, wherein the Queue Size fields are as in BSR A-Control fields.
Example 66 may include the subject matter of any one of examples 54 to 65, and/or some other example herein, wherein the response includes the information about the Feedbacks that are included in the Feedback field, instead or in addition to the information included in the Block Ack Starting Sequence Control subfield.
Example 67 may include the subject matter of any one of examples 54 to 66, and/or some other example herein, wherein the beginning of the Feedback field would include the Presence fields that constitute the Feedback field.
Example 68 may include the subject matter of any one of examples 54 to 67, and/or some other example herein, wherein the Feedback field is based on Per Type Feedback fields.
Example 69 may include the subject matter of any one of examples 54 to 68, and/or some other example herein, wherein the Per Type Feedback fields are for Unavailability type and based on the Feedback length including 18 bits (or 3 bytes if it is needed to stay byte aligned) the Feedback Useful field would include the 2 Unavailability fields (Unavailability Start time and Unavailability Duration field).
Example 70 may include the subject matter of any one of examples 54 to 69, and/or some other example herein, wherein the Per Type Feedback fields are for Buffer Status Report (BSR) type, wherein the Feedback type is be set to BSR, and based on Feedback Useful field including first a TID bitmap field of 8 bits with each bit corresponding to a TID and set to 1 if the Queue size field is present for that TID, and then including all the Queue Size fields for each of the TID for which the corresponding bit is set to 1 in the TID Bitmap field, in increasing order to TID values ( in this example, starting from Queue size for TID 0 and then for TID7).
Example 71 may include one or more non-transitory computer-readable media comprising instructions to cause an electronic device, upon execution of the instructions by one or more processors of the electronic device, to perform one or more elements of a method described in or related to any of examples 1-70, or any other method or process described herein.
Example 72 may include an apparatus comprising logic, modules, and/or circuitry to perform one or more elements of a method described in or related to any of examples 1-70, or any other method or process described herein.
Example 73 may include a method, technique, or process as described in or related to any of examples 1-70, or portions or parts thereof.
Example 74 may include an apparatus comprising: one or more processors and one or more computer readable media comprising instructions that, when executed by the one or more processors, cause the one or more processors to perform the method, techniques, or process as described in or related to any of examples 1-70, or portions thereof.
Example 75 may include a method of communicating in a wireless network as shown and described herein.
Example 76 may include a system for providing wireless communication as shown and described herein.
Example 77 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device, comprising:
a storage;
a processor coupled to the storage; the processor configured to:
receive a buffer status report protocol (BSRP) trigger frame;
transmit a response in a non-high throughput (non-HT) duplicate physical protocol data unit (PPDU) format, wherein the response comprises a multi-station block acknowledgment frame; and
include unavailability information in the multi-station block acknowledgment frame.

2. The device of claim 1, wherein the processing circuitry is further configured to aggregate quality of service (QoS) Null frames with the multi-station block acknowledgment frame in response to the BSRP trigger frame.

3. The device of claim 1, wherein the multi-station block acknowledgment frame comprises buffer status information for one or more traffic identifiers (TIDs).

4. The device of any one of claims 1 to 3, wherein the BSRP trigger frame is utilized as an initial control frame to solicit responses from multiple scheduled stations.

5. The device of any one of claims 1 to 4, further comprising a transceiver configured to transmit and receive wireless signals.

6. The device of claim 5, further comprising an antenna coupled to the transceiver to cause to send the frame.

7. One or more non-transitory computer-readable media having stored thereon instructions that, when executed by one or more processors, cause the one or more processors to:
receive a buffer status report protocol (BSRP) trigger frame;
transmit a response in a non-high throughput (non-HT) duplicate physical protocol data unit (PPDU) format, wherein the response comprises a multi-station block acknowledgment frame; and
include unavailability information in the multi-station block acknowledgment frame.

8. The non-transitory computer-readable media of claim 7, wherein the instructions that, when executed by one or more processors, further cause the one or more processors to aggregate quality of service (QoS) Null frames with the multi-station block acknowledgment frame in response to the BSRP trigger frame.

9. The non-transitory computer-readable media of any one of claim 7 or 8, wherein the BSRP trigger frame is utilized as an initial control frame to solicit responses from multiple scheduled stations.

10. A method comprising:
receiving a buffer status report protocol (BSRP) trigger frame;
transmitting a response in a non-high throughput (non-HT) duplicate physical protocol data unit (PPDU) format, the response including a multi-station block acknowledgment frame; and
including unavailability information in the multi-station block acknowledgment frame.

11. The method of claim 10, further comprising aggregating quality of service (QoS) Null frames with the multi-station block acknowledgment frame in response to the BSRP trigger frame.

12. The method of any one of claim 10 or 11, wherein the BSRP trigger frame is utilized as an initial control frame to solicit responses from multiple scheduled stations.

13. An apparatus comprising means for:
receiving a buffer status report protocol (BSRP) trigger frame;
transmitting a response in a non-high throughput (non-HT) duplicate physical protocol data unit (PPDU) format, the response including a multi-station block acknowledgment frame; and
including unavailability information in the multi-station block acknowledgment frame.

14. The apparatus of claim 13, further comprising aggregating quality of service (QoS) Null frames with the multi-station block acknowledgment frame in response to the BSRP trigger frame.

15. The apparatus of any one of claim 13 or 14, wherein the BSRP trigger frame is utilized as an initial control frame to solicit responses from multiple scheduled stations.
